# EUROPÄISCHE PATENTSCHRIFT

(11) **EP 4 520 604 B1**
(45) Veröffentlichungstag und Bekanntmachung des Hinweises auf die Patenterteilung: **17.06.2026**
(21) Anmeldenummer: 24198539.9
(22) Anmeldetag: 05.09.2024
(51) Int. Cl.: B60T 13/66, B60T 8/32

(54) **VERFAHREN ZUM ANFAHREN EINES MEHRGLIEDRIGEN SCHIENENFAHRZEUGS**
METHOD FOR STARTING A MULTI-UNIT RAIL VEHICLE
PROCÉDÉ DE DÉMARRAGE D'UN VÉHICULE FERROVIAIRE À PLUSIEURS ÉLÉMENTS

(30) Priorität: 11.09.2023 DE 102023124404
(43) Veröffentlichungstag der Anmeldung: 12.03.2025
(73) Patentinhaber: Voith Patent GmbH, 89522 Heidenheim (DE)
(72) Erfinder: Habets, Matheus, 73450 Neresheim (DE); Theilacker, Robert, 89542 Herbrechtingen (DE)
(74) Vertreter: Voith Patent GmbH - Patentabteilung

(56) Entgegenhaltungen:
- EP-A2- 2 511 146
- EP-B1- 1 606 154
- US-B1- 6 250 723

## Beschreibung

Die vorliegende Erfindung betrifft ein Verfahren zum Anfahren eines mehrgliedrigen Schienenfahrzeugs gemäß dem Oberbegriff von Anspruch 1.

Ein solches Fahrzeug ist aus dem Dokument EP 2511146 A2 bekannt.

Mehrgliedrige Schienenfahrzeuge, insbesondere Güterzüge, wie sie die vorliegende Erfindung gemäß einer Ausführungsform betrifft, werden durch ein pneumatisch ausgelöstes Bremssystem, das vorliegend als pneumatisches Bremssystem bezeichnet wird, welches Betriebsbremsen in jedem Wagen umfasst, über die Lok gebremst. Bekannt sind auch Schienenfahrzeuge, insbesondere Triebzüge für den Gütertransport, die mit einer elektropneumatischen Bremse, wie im Personenverkehr, versehen sind und dabei eine Abstellbremse beziehungsweise Handbremse umfassen.

Die pneumatischen Bremssysteme werden in der Regel durch ein pneumatisches Einleitungssystem oder Zweileitungssystem mit einer Versorgungsleitung angesteuert. Das Bremsen erfolgt über eine pneumatische Druckabsenkung, die pneumatisch oder elektrisch eingeleitet werden kann. Aufgrund der Druckabsenkung erfolgt ein Anlegen der Bremsklötze an die Wagenräder.

Das pneumatische Bremssystem des Schienenfahrzeugs umfasst eine Hauptluftleitung, die durch alle Wagen des Schienenfahrzeugs geführt ist und den notwendigen Luftdruck in allen Wagen zur Verfügung stellt. Die Verbindung der Hauptluftleitung zwischen den Wagen erfolgt über Luftkupplungen. Im Triebfahrzeug, das heißt der Lok, sind ein Hauptluftbehälter und ein Luftpresser sowie ein Führerbremsventil vorgesehen. Der Luftpresser erzeugt den notwendigen Luftdruck in der Hauptluftleitung und der Hauptluftbehälter dient als Druckluftspeicher. Wird der Luftdruck in der Hauptluftleitung durch den Triebfahrzeugführer über das Führerbremsventil abgesenkt, werden die Bremsen in der Lok, das heißt dem Triebfahrzeug, und in allen hieran angekuppelten Wagen, angelegt, insbesondere über einen Druckluftaufbau in den Bremszylindern, wobei für diesen Druckaufbau die Druckluft aus Vorratsluftbehältern der einzelnen Wagen zur Verfügung gestellt wird, ein Steuerventil in den einzelnen Wagen aufgrund des Druckabfalls in der Hauptluftleitung in einen die Druckluft aus den Vorratsluftbehältern in die Bremszylinder leitende Stellung verbracht wird und so entgegen einer Federvorspannkraft der Bremsklotz an das jeweilige Triebfahrzeugrad angelegt wird. Wird der Luftdruck in der Hauptluftleitung durch den Triebfahrzeugführer über das Führerbremsventil wieder erhöht, bewegen sich die Steuerventile in den Wagen in eine den Luftdruck aus den Vorratsluftbehältern in den Wagen gegenüber den Bremszylindern absperrende Stellung und die Bremszylinder werden mit der Kraft der Vorspannfedern betätigt, um die Bremsklötze wieder von den Wagenrädern abzuheben.

Die vorliegende Erfindung ist prinzipiell jedoch auch bei Schienenfahrzeugen mit anderen pneumatischen Bremssystemen anwendbar.

Aufgrund dessen, dass der Bremsbefehl über die Hauptluftleitung vom Triebfahrzeug nacheinander zu allen angekuppelten Wagen geleitet wird und erst dann, wenn der Druckabfall den jeweiligen Wagen erreicht hat, die Bremsung des jeweiligen Wagens eingeleitet wird, werden die über die Hauptluftleitung angesteuerten Betriebsbremsen der verschiedenen miteinander gekuppelten Wagen nicht gleichzeitig gelöst. Vielmehr kommt es beim Lösen der Betriebsbremsen zu Zugkräften zwischen den Wagen, das heißt in den mechanischen Kupplungen, mit denen die Wagen aneinander gekuppelt sind, wenn im hinteren Schienenfahrzeugteil die Bremsen noch anliegen und das Triebfahrzeug bereits beschleunigt. Dieser Effekt, bei dem das Schienenfahrzeug als Mehrmassenschwinger mit den Zug- und Stoßeinrichtungen in den Kupplungen zwischen den Wagen als Feder/Dämpfer-Elemente wirkt, kann zu einem Aufschaukeln des Schienenfahrzeugs führen und es kann zu Zugtrennungen und Längsdruckentgleisungen kommen. Zudem kann das Mitschlepp gebremster Wagen zu unerwünschten Abflachungen an den Rädern führen.

Die Abstellbremsen oder Handbremsen werden herkömmlich genutzt, um die einzelnen Wagen oder Wagenverbünde für längere Zeit zu parken, besonders dann, wenn aufgrund der entleerten Vorratsluftbehälter mit den Betriebsbremsen keine Bremskraft auf die Räder mehr ausgeübt werden kann. Auch mit den Handbremsen ist es zum Beispiel möglich, die Bremsklötze an das Rad bremsend anzulegen. Zudem kommen andere Handbremsen, beispielsweise Scheibenbremse und dergleichen, in Betracht.

Der vorliegenden Erfindung liegt die Aufgabe zugrunde, ein Verfahren zum Anfahren eines mehrgliedrigen Schienenfahrzeugs anzugeben, mit dem das genannte Aufschaukeln des Schienenfahrzeugs vermieden wird und/oder die genannten Abflachungen an den Rädern verhindert werden können.

Die erfindungsgemäße Aufgabe wird durch ein Verfahren mit den Schritten von Anspruch 1 gelöst. Die abhängigen Ansprüche beschreiben vorteilhafte und besonders zweckmäßige Ausgestaltungen der Erfindung.

Beim erfindungsgemäßen Verfahren zum Anfahren eines mehrgliedrigen Schienenfahrzeugs mit einer Vielzahl von mechanisch aneinander gekuppelten Wagen, wobei das Schienenfahrzeug mit einem pneumatischen Bremssystem versehen ist, umfassend eine durch alle Wagen geführte Hauptluftleitung und mit Luftdruck aus der Hauptluftleitung über ein Steuerventil beaufschlagbare Bremszylinder, sowie mit den Bremszylindern in Abhängigkeit der Druckluftbeaufschlagung betätigte Betriebsbremsen in jedem Wagen, wobei jeder Wagen oder mehrere Wagen jeweils elektrische oder elektropneumatische Handbremsen aufweist/aufweisen, wird zunächst ein Anfahrbefehl von einem Fahrzeugführer oder von einer automatischen Fahrzeugsteuerung in einem gebremsten Zustand des Schienenfahrzeugs, in welchem das Schienenfahrzeug mit den Betriebsbremsen gebremst wird, empfangen. Die Betriebsbremsen werden in allen Wagen durch Einstellen eines Steuerluftdrucks in der Hauptluftleitung und/oder durch anderweitiges Beaufschlagen der Steuerventile in den Wagen mit einem Steuerluftdruck gelöst und das Schienenfahrzeug wird angefahren. Der Steuerluftdruck kann prinzipiell ein Druckaufbau gegenüber einem zuvor vergleichsweise niedrigeren Druck sein, aber auch ein Druckabfall gegenüber einem zuvor vergleichsweise höheren Luftdruck, je nach Gestaltung des pneumatischen Bremssystems.

Erfindungsgemäß werden vor dem Lösen der Betriebsbremsen die Wagen mit den elektrischen oder elektropneumatischen Handbremsen gebremst und diese Handbremsen werden unmittelbar vor dem Anfahren oder gleichzeitig mit dem Beginn des Anfahrens zentral angesteuert gleichzeitig gelöst. Gemäß einer alternativen Ausführungsform der Erfindung werden die elektrischen oder elektropneumatischen Handbremsen beim Anfahren in einer Reihenfolge mit zeitlichen Abständen einzeln oder in Gruppen nacheinander gelöst.

Dadurch, dass beim erfindungsgemäßen Verfahren das Schienenfahrzeug beim Anfahren nicht mehr mit den Betriebsbremsen gehalten wird und dadurch die Betriebsbremsen der einzelnen Wagen zu einem ungünstigen Zeitpunkt gelöst werden könnten, sondern das Schienenfahrzeug zunächst mit den elektrischen oder elektropneumatischen Handbremsen in den verschiedenen Wagen, in denen elektrische oder elektropneumatische Handbremsen verfügbar sind, gehalten wird, kann das Lösen dieser Bremsen optimal auf den Anfahrvorgang des Schienenfahrzeugs abgestimmt werden, sodass die herkömmlichen Probleme vermieden werden. Das erfindungsgemäße Verfahren ist besonders zum Anfahren des Schienenfahrzeugs an einer Steigung bergauf geeignet, weil dort bisher der Fahrzeugführer das Problem hatte, dass die Lok, wenn der Fahrzeugführer zu spät den Traktionsbetrieb gestartet hat, nach hinten wegrollt, oder wenn der Fahrzeugführer den Traktionsbetrieb rechtzeitig gestartet hat, die hinteren Wagen noch gebremst sind und gebremst mitgeschleppt werden.

Gemäß einer vorteilhaften Ausführungsform der Erfindung werden die elektrischen oder elektropneumatischen Handbremsen in den Wagen nur dann zentral angesteuert gleichzeitig oder nacheinander gelöst, wenn der Fahrzeugführer zuvor einen Berganfahrmodus aktiviert hat, beispielsweise durch eine entsprechende Eingabevorrichtung im Triebfahrzeug des Schienenfahrzeugs. Damit kann der Fahrzeugführer beispielsweise nur dann das erfindungsgemäße Verfahren mit zentraler Ansteuerung der elektrischen oder elektropneumatischen Handbremsen zum Halten des Schienenfahrzeugs beim Anfahren auslösen, wenn das Schienenfahrzeug an einer entsprechenden Steigung steht.

Die Reihenfolge und/oder die zeitlichen Abstände wird/werden bevorzugt in Abhängigkeit einer Abfolge von im Schienenfahrzeug miteinander gekuppelten Wagen und/oder in Abhängigkeit einer Anzahl der im Schienenfahrzeug miteinander gekuppelten Wagen und/oder in Abhängigkeit einer Länge des Schienenfahrzeugs festgelegt. Beispielsweise ist in einem Bremssteuergerät des Schienenfahrzeugs, insbesondere im Triebfahrzeug, eine Zuordnung von verschiedenen Reihenfolgen und/oder zeitlichen Abständen zu verschiedenen Abfolgen von im Schienenfahrzeug miteinander gekuppelten Wagen und/oder zu verschiedenen Anzahlen der im Schienenfahrzeug miteinander gekuppelten Wagen und/oder zu verschiedenen Schienenfahrzeuglängen hinterlegt, sodass die Reihenfolge und/oder die zeitlichen Abstände entsprechend vom Bremssteuergerät angepasst auf das konkret vorliegende Schienenfahrzeug ausgewählt werden kann/können.

Bei der Abfolge von im Schienenfahrzeug miteinander gekuppelten Wagen kann es sich beispielsweise um die Beschreibung der einzelnen Wagentypen und/oder der Masse der einzelnen Wagen handeln, die in der Abfolge miteinander gekuppelt sind.

Gemäß einer Ausführungsform der Erfindung ist in jedem Wagen ein Bremssteuergerät vorgesehen, wobei die Bremssteuergeräte der verschiedenen Wagen miteinander drahtlos oder drahtgebunden kommunizieren, und nach Aktivierung des Berganfahrmodus durch den Fahrzeugführer wird eines der Bremssteuergeräte als Leitsteuergerät ausgewählt und gibt Steuerbefehle zum Bremsen an alle anderen Bremssteuergeräte aus. Beispielsweise handelt es sich bei dem Leitsteuergerät um das Bremssteuergerät des Triebwagens.

Gemäß einer Ausführungsform wird der Berganfahrmodus automatisch deaktiviert, wenn der letzte Wagen des Schienenfahrzeugs in Bewegung ist. Dadurch können Störungen vermieden werden.

Wenn die Kupplungen zwischen den Wagen Sensoren zur wenigstens mittelbaren Erfassung einer Zugkraft aufweisen, kann/können bei Erfassung einer Zugkraft in einer Kupplung die Handbremse(n) des der jeweiligen Kupplung in der Wagenreihenfolge folgenden Wagens gelöst werden, um den optimalen Zeitpunkt des Lösens der elektrischen oder elektropneumatischen Handbremse(n) zu erzielen.

Zusätzlich oder alternativ wird eine Bewegung eines Wagens erfasst, beispielsweise mit einem Bewegungssensor und/oder Beschleunigungssensor, und bei erfasster Bewegung wird/werden die elektrische(n) oder elektropneumatische(n) Handbremse(n) des Wagens gelöst, der dem Wagen folgt, in dem die Bewegung erfasst wurde. Auch dies dient zur Einstellung eines optimalen Zeitpunkts zum Lösen der elektrischen oder elektropneumatischen Handbremse(n).

Gemäß einer Ausführungsform der Erfindung werden die zeitlichen Abstände vor dem Beginn des Anfahrens oder beim Anfahren berechnet, insbesondere mittels einer Simulation der durch das Schienenfahrzeug beim Anfahren von Wagen zu Wagen verlaufenden Zugkraftwelle.

Bevorzugt werden die elektrischen oder elektropneumatischen Handbremsen mittels einem elektrischen Stellmotor aktiviert und gelöst.

Als Sicherheitsmaßnahme kann vorgesehen sein, dass nach Empfangen des Anfahrbefehls nach Ablauf einer vorbestimmten Zeitspanne, wenn sich nicht alle Wagen des Schienenfahrzeugs in Bewegung gesetzt haben, die Betriebsbremsen geschlossen und die elektrischen oder elektropneumatischen Handbremsen gelöst werden und eine Warnmeldung für den Fahrzeugführer ausgegeben wird. In diesem Fall kann der Fahrzeugführer dann das Schienenfahrzeug auf herkömmlichem Wege anfahren.

Durch die zeitliche Begrenzung können eigenständige oder fehlerhaft ausgelöste Anfahrvorgänge vermieden werden. Eine solche zeitliche Begrenzung kann beispielsweise als Basisfunktion in das oder die Bremssteuergeräte integriert sein und nicht durch Softwareupgrades oder andere Einstellungssignale überschrieben werden können.

Software zur Ausführung des erfindungsgemäßen Verfahrens kann in bestehenden Bremssteuergeräten nachgerüstet werden.

Die elektrischen oder von elektropneumatischen Handbremsen können insbesondere durch elektrische oder elektronische Steuerbefehle ohne Verzögerung angesteuert werden.

Die Steuerung der Handbremsen kann sowohl drahtgebunden als auch drahtlos erfolgen. Es können elektrische Speicher in den Wagen vorgesehen sein, um die notwendige Energie zum Ansteuern der Handbremsen oder zur Betätigung des elektrischen Stellmotors bereitzustellen.

Der Stellmotor kann eine eigene Steuervorrichtung zu seiner Ansteuerung aufweisen. Diese kann mit den Bremssteuergeräten drahtlos oder drahtgebunden verbunden werden.

Der elektrische Speicher kann regenerativ beim Bremsen des Wagens geladen werden.

Die Erfindung soll nachfolgend anhand eines Ausführungsbeispiels und der Figur exemplarisch beschrieben werden.

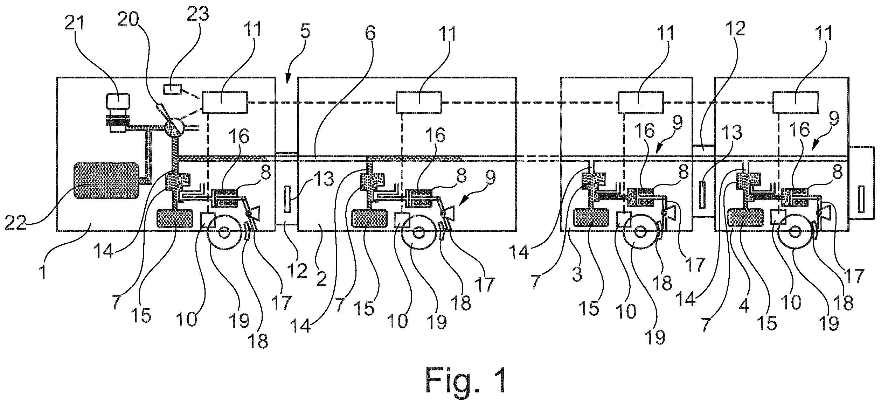

In der Figur 1 ist schematisch ein Schienenfahrzeug zur Anwendung des erfindungsgemäßen Verfahrens dargestellt. Das Schienenfahrzeug umfasst eine Vielzahl von Wagen 1, 2, 3, 4. Vorliegend sind als Wagen nur der Triebwagen 1, der dem Triebwagen 1 unmittelbar folgende Wagen 2, der vorletzte Wagen 3 und der letzte Wagen 4 im Schienenfahrzeug dargestellt. In der Regel sind weitere Wagen zwischen diesen Wagen 1, 2, 3, 4 vorgesehen.

Zum Bremsen des Schienenfahrzeugs ist ein pneumatisches Bremssystem 5 mit einer Hauptluftleitung 6 vorgesehen, die durch alle Wagen 1-4 reicht. Das pneumatische Bremssystem 5 umfasst in jedem Wagen 1-4 ein Steuerventil 7 in einer von der Hauptluftleitung 6 abzweigenden Leitung 14. Das Steuerventil 7 wird mit Luftdruck aus der Hauptluftleitung 6 beaufschlagt. Bei vergleichsweise hohem Luftdruck in der Hauptluftleitung 6 wird das Steuerventil 7 in eine Stellung geschaltet, in welcher es eine druckluftleitende Verbindung zwischen einem Vorratsluftbehälter 15 in jedem Wagen 1-4 und einem Bremszylinder 8 unterbricht, sodass der Bremszylinder 8 von einem Federspeicher 16 in eine Stellung verschoben wird, in welcher er über das Bremsgestänge 17 den oder die Bremsklötze 18 vom Wagenrad 19 abhebt. Dies ist exemplarisch für die Wagen 1 und 2 dargestellt.

Wenn hingegen im entsprechenden Abschnitt der Hauptluftleitung 6 und entsprechend in der abzweigenden Leitung 14 in einem Wagen 1-4 ein vergleichsweise niedriger Luftdruck herrscht, wie exemplarisch für die Wagen 3 und 4 dargestellt ist, so öffnet das jeweilige Steuerventil 7 die druckluftleitende Verbindung zwischen dem jeweiligen Vorratsluftbehälter 15 und dem jeweiligen Bremszylinder 8, sodass entgegen der Kraft des jeweiligen Federspeichers 16 der Bremszylinder 8 mit diesem Luftdruck aus dem jeweiligen Vorratsluftbehälter 15 den Bremsklotz 18 über das Bremsgestänge 17 an das Wagenrad 19 anlegt.

Vorliegend sind exemplarisch jeweils nur ein Wagenrad 19 und ein Bremszylinder 8 und dergleichen für jeden Wagen 1-4 dargestellt. In der Praxis werden entsprechend mehrere dieser Bauteile pro Wagen vorgesehen sein.

Der Luftdruck in der Hauptluftleitung 6 wird vom Fahrzeugführer im Triebwagen 1 über ein Führerbremsventil 20 eingestellt. Dieses verbindet oder trennt einen Abschnitt der Hauptluftleitung 6 ab, in welchem ein Luftpresser 21 und ein Hauptluftbehälter 22 vorgesehen sind, um den hohen Luftdruck in der Hauptluftleitung 6 zur Verfügung zu stellen. Entsprechend der Ventilstellung des Führerbremsventils 20 stellt sich der Druck im anderen durch die einzelnen Wagen 1-4 geführten Abschnitt der Hauptluftleitung 6 ein.

Die einzelnen Wagenabschnitte der Hauptluftleitung 6 in den verschiedenen Wagen 1-4 sind über in mechanischen Kupplungen 12 zwischen den Wagen 1-4 vorgesehene Luftkupplungen miteinander verbunden. Die mechanischen Kupplungen 12 weisen gemäß einer vorteilhaften Ausführungsform der Erfindung jeweils einen Sensor 13 zur Erfassung einer Zugkraft auf.

Die über den jeweiligen Druck in der Hauptluftleitung 6 und die Bremszylinder 8 betätigten Wagenbremsen werden vorliegend als Betriebsbremsen 9 bezeichnet. Zusätzlich zu diesen Betriebsbremsen 9 sind in jedem Wagen 1-4 eine oder mehrere Handbremsen 10 vorgesehen, mit welcher/welchen der jeweilige Wagen 1-4 gebremst werden kann. Die Handbremsen 10 werden über ein Bremssteuergerät 11, das im jeweiligen Wagen 1-4 vorgesehen ist, angesteuert. Da die Bremssteuergeräte 11 elektrisch oder elektronisch ausgeführt sind und die Handbremsen 10 mit elektrischen oder elektronischen Signalen ansteuern, wird eine sehr kurze Ansprechzeit beim Aktivieren und Lösen der Handbremsen 10 erreicht.

Die Bremssteuergeräte 11 der verschiedene Wagen 1-4 sind elektrisch oder elektronisch drahtlos oder drahtgebunden miteinander verbunden. Ferner ist das Bremssteuergerät 11 im Triebwagen 1 derart beispielsweise mit dem Führerbremsventil 20 oder einem anderen geeigneten Bauteil verschaltet, das es erfasst, wenn der Fahrzeugführer den Befehl zum Lösen der Betriebsbremsen 9 gegeben hat, weil er das Schienenfahrzeug anfahren will. Ferner kann im Triebfahrzeug 1 eine vom Fahrzeugführer betätigbare Eingabevorrichtung 23 vorgesehen sein, die mit dem Bremssteuergerät 11 verbunden ist und über welche der Fahrzeugführer einen Berganfahrmodus aktivieren kann.

Mit einem solchen Schienenfahrzeug kann das Anfahren zum Beispiel wie folgt erfolgen:
Beispielsweise steht das Schienenfahrzeug in einer Steigung bergauf auf einer Strecke. Der Fahrzeugführer schaltet über die Eingabevorrichtung 23 den Berganfahrmodus ein. Das Empfangen des Einschaltbefehls kann dem Fahrzeugführer beispielsweise über eine Kontrollleuchte signalisiert werden. Beispielsweise leuchtet die Kontrollleuchte gelb.

Alle Wagen 1-4, die über ein entsprechendes Bremssteuergerät 11 und eine damit verbundene Handbremse 10 verfügen, werden mit der Handbremse 10, die entsprechend elektrisch oder elektronisch aktiviert wird, gebremst. Die Bremssteuergeräte 11 der verschiedenen Wagen 1-4 kommunizieren entsprechend miteinander, um das Bremsen zu betätigen und rückzumelden.

Insbesondere kann nun mit einem Bremssteuergerät 11, beispielsweise des Triebwagens 1, vorteilhaft in Abhängigkeit einer Abfolge von im Schienenfahrzeug miteinander gekuppelten Wagen 1-4 und/oder in Abhängigkeit einer Anzahl der im Schienenfahrzeug miteinander gekuppelten Wagen 1-4 und/oder in Abhängigkeit einer Länge des Schienenfahrzeugs festgelegt werden, in welcher Reihenfolge und/oder mit welchen zeitlichen Abständen die Handbremsen 10 der einzelnen Wagen 1-4 optimal beim Anfahren des Schienenfahrzeugs gelöst werden sollten. Entsprechende Daten für diese Bestimmung können beispielsweise in dem Bremssteuergerät 11 aufgrund von empirischen Versuchen und/oder Simulationen hinterlegt sein.

Alternativ kann der optimale Zeitpunkt des Lösens einer Handbremse 10 beim Anfahren des Schienenfahrzeugs in einem Wagen 1-4 auch dadurch bestimmt werden und die entsprechende Handbremse 10 gelöst werden, wenn die Sensoren 13 in den mechanischen Kupplungen zur Erfassung einer Zugkraft vorgesehen sind. Sobald eine bestimmte Zugkraft mit dem Sensor 13 in einer Kupplung 12 erfasst wird, wird die Handbremse 10 des unmittelbar der Kupplung 12 nachfolgenden Wagens 1-4 gelöst. Entsprechend könnte auch das Erfassen einer Bewegung eines Wagens 1-4 als Signal zum Lösen der Handbremse 10 des, insbesondere unmittelbar, folgenden Wagens 1-4 herangezogen werden.

Wenn die Reihenfolge und/oder der Zeitpunkt des Lösens der Handbremsen 10 im Vorhinein bestimmt werden, kann der Fahrzeugführer, wenn die entsprechende Reihenfolge und/oder die entsprechenden Zeitpunkte berechnet wurden, ein Signal erhalten, dass die Anfahrsteuerung bereit ist. Beispielsweise leuchtet die genannte Kontrollleuchte nun grün.

Wenn nun der Fahrzeugführer einen Anfahrbefehl ausgibt, beispielsweise durch Betätigen des Führerbremsventils 20, so empfängt das Bremssteuergerät 11 im Triebwagen 1 diesen Anfahrbefehl und leitet die Ansteuerung der Handbremsen 10 über die jeweiligen Bremssteuergeräte 11 ein, damit die Handbremse 10 eines jeden Wagens 1-4 zum vorbestimmten Zeitpunkt oder beispielsweise in Abhängigkeit des Signals der Sensoren 13 bestimmten Zeitpunkt gelöst werden. Das Schienenfahrzeug fährt ohne Blockade einzelner Wagen 1-4 durch Bremsen und ohne Zurückrollen an.

Bevorzugt wird der Berganfahrmodus automatisch deaktiviert, wenn sich der letzte Wagen 1-4 in Bewegung gesetzt hat.

Die vorliegende Erfindung kann auch ohne die Notwendigkeit einer Aktivierung des Berganfahrmodus umgesetzt werden. In diesem Fall kann beispielsweise statt dem Empfangen des Einschaltbefehl das Empfangen des Anfahrbefehls als Startpunkt des Verfahrens herangezogen werden. Das Anfahren erfolgt dann ohne zusätzlichen Befehl durch den Fahrzeugführer, wenn die entsprechende Reihenfolge und/oder die entsprechenden Zeitpunkte berechnet wurden. Alternativ erfolgt das Anfahren sofort nach Schließen der Handbremsen 10 und Lösen der Betriebsbremsen 9, beginnen im Triebwagen 1, und die Handbremsen 10 aller folgenden Wagen 2-4 werden gelöst, wenn die Zugkraft mit dem jeweiligen Sensor 13 in der Kupplung 12 vor dem Wagen 2-4 festgestellt wird oder die Bewegung des vorausfahrenden Wagens 1-3.

Obwohl die vorliegende Erfindung maßgeblich anhand eines vom Fahrzeugführer ausgegebenen Anfahrbefehls beschrieben wurde, kann die Erfindung auch mit einer automatischen Fahrsteuerung verwendet werden, die einen solchen Anfahrbefehl ausgibt.

### Bezugszeichenliste

- 1: Wagen
- 2: Wagen
- 3: Wagen
- 4: Wagen
- 5: pneumatisches Bremssystem
- 6: Hauptluftleitung
- 7: Steuerventil
- 8: Bremszylinder
- 9: Betriebsbremse
- 10: Handbremse
- 11: Bremssteuergerät
- 12: Kupplung
- 13: Sensor
- 14: Leitung
- 15: Vorratsluftbehälter
- 16: Federspeicher
- 17: Bremsgestänge
- 18: Bremsklotz
- 19: Wagenrad
- 20: Führerbremsventil
- 21: Luftpresser
- 22: Hauptluftbehälter
- 23: Eingabevorrichtung

## Patentansprüche

1. Verfahren zum Anfahren eines mehrgliedrigen Schienenfahrzeugs mit einer Vielzahl von mechanisch aneinander gekuppelten Wagen (1, 2, 3, 4), wobei das Schienenfahrzeug mit einem pneumatischen Bremssystem (5) versehen ist, umfassend eine durch alle Wagen (1-4) geführte Hauptluftleitung (6) und mit Luftdruck aus der Hauptluftleitung (6) über ein Steuerventil (7) beaufschlagbare Bremszylinder (8) sowie mit den Bremszylindern (8) in Abhängigkeit der Druckluftbeaufschlagung betätigte Betriebsbremsen (9) in jedem Wagen (1-4), wobei
jeder Wagen (1-4) oder mehrere Wagen (1-4) jeweils eine elektrische oder elektropneumatische Handbremse (10) aufweist/aufweisen;
mit den folgenden Schritten:
- Empfangen eines Anfahrbefehls von einem Fahrzeugführer oder einer automatischen Fahrsteuerung in einem gebremsten Zustand des Schienenfahrzeugs, in welchem das Schienenfahrzeug mit den Betriebsbremsen (9) gebremst wird;
- Lösen der Betriebsbremsen (9) in allen Wagen (1-4) durch einen Steuerluftdruck in der Hauptluftleitung (6) und/oder durch Beaufschlagung der Steuerventile (7) in den Wagen (1-4) mit einem Steuerluftdruck und Anfahren des Schienenfahrzeugs;
**dadurch gekennzeichnet, dass**
vor dem Lösen der Betriebsbremsen (9) die Wagen (1-4) mit den elektrischen oder elektropneumatischen Handbremsen (10) gebremst werden und die elektrischen oder elektropneumatischen Handbremsen (10) unmittelbar vor dem Anfahren oder gleichzeitig mit dem Beginn des Anfahrens zentral angesteuert gleichzeitig gelöst werden oder beim Anfahren in einer Reihenfolge mit zeitlichen Abständen einzeln oder in Gruppen nacheinander gelöst werden.

2. Verfahren gemäß Anspruch 1, **dadurch gekennzeichnet, dass** das Schienenfahrzeug an einer Steigung bergauf angefahren wird.

3. Verfahren gemäß einem der Ansprüche 1 oder 2, **dadurch gekennzeichnet, dass** die elektrischen oder elektropneumatischen Handbremsen (10) in den Wagen (1-4) nur dann zentral angesteuert gleichzeitig oder nacheinander gelöst werden, wenn der Fahrzeugführer zuvor einen Berganfahrmodus aktiviert hat.

4. Verfahren gemäß einem der Ansprüche 1 bis 3, **dadurch gekennzeichnet, dass** die Reihenfolge und/oder die zeitlichen Abstände in Abhängigkeit einer Abfolge von im Schienenfahrzeug miteinander gekuppelten Wagen (1-4) und/oder in Abhängigkeit einer Anzahl der im Schienenfahrzeug miteinander gekuppelten Wagen (1-4) und/oder in Abhängigkeit einer Länge des Schienenfahrzeugs festgelegt wird/werden.

5. Verfahren gemäß einem der Ansprüche 3 oder 4, **dadurch gekennzeichnet, dass** in jedem Wagen (1-4) ein Bremssteuergerät (11) zum Ansteuern der elektrischen oder elektropneumatischen Handbremsen (10) vorgesehen ist, wobei die Bremssteuergeräte (11) der verschiedenen Wagen (1-4) miteinander kommunizieren, und nach Aktivierung des Berganfahrmodus durch den Fahrzeugführer eines der Bremssteuergeräte (11) als Leitsteuergerät ausgewählt wird, das Steuerbefehle zum Bremsen an alle anderen Bremssteuergeräte (11) ausgibt.

6. Verfahren gemäß einem der Ansprüche 3 bis 5, **dadurch gekennzeichnet, dass** der Berganfahrmodus automatisch deaktiviert wird, wenn der letzte Wagen (4) des Schienenfahrzeugs in Bewegung ist.

7. Verfahren gemäß einem der Ansprüche 1 bis 6, **dadurch gekennzeichnet, dass** an den Kupplungen (12) zwischen den Wagen (1-4) Sensoren (13) zur wenigstens mittelbaren Erfassung einer Zugkraft angeordnet sind, und bei Erfassung einer Zugkraft die elektrische oder elektropneumatische Handbremse (10) des der jeweiligen Kupplung (12) in der Wagenreihenfolge folgenden Wagens (1-4) gelöst wird.

8. Verfahren gemäß einem der Ansprüche 1 bis 7, **dadurch gekennzeichnet, dass** eine Bewegung eines Wagens (1-4) erfasst wird und bei erfasster Bewegung die elektrische oder elektropneumatische Handbremse (10) des dem Wagen (1-4) in der Wagenreihenfolge folgenden Wagens (1-4) gelöst wird.

9. Verfahren gemäß einem der Ansprüche 1 bis 8, **dadurch gekennzeichnet, dass** die zeitlichen Abstände vor dem Beginn des Anfahrens oder beim Anfahren berechnet werden, insbesondere mittels einer Simulation einer durch das Schienenfahrzeug beim Anfahren von Wagen (1-4) zu Wagen (1-4) verlaufenden Zugkraftwelle.

10. Verfahren gemäß einem der Ansprüche 1 bis 9, **dadurch gekennzeichnet, dass** die elektrischen oder elektropneumatischen Handbremsen (10) mit einem elektrischen Stellmotor aktiviert und gelöst werden.

11. Verfahren gemäß einem der Ansprüche 1 bis 10, **dadurch gekennzeichnet, dass** nach Empfangen des Anfahrbefehls nach Ablauf einer vorbestimmten Zeitspanne, wenn sich nicht alle Wagen (1-4) in Bewegung gesetzt haben, die Betriebsbremsen (9) geschlossen und die elektrischen oder elektropneumatischen Handbremsen (10) gelöst werden und eine Warnmeldung ausgegeben wird.

## Claims

1. Method for starting a multi-unit rail vehicle comprising a plurality of mechanically coupled cars (1, 2, 3, 4), wherein the rail vehicle is equipped with a pneumatic braking system (5) comprising a main air line (6) running through all cars (1-4) and brake cylinders (8), as well as service brakes (9) in each car (1-4) that are actuated by the brake cylinders (8) in response to the supply of compressed air, wherein
each car (1-4) or several cars (1-4) each has an electric or electro-pneumatic parking brake (10);
comprising the following steps:
- receiving a start command from a driver or an automatic driving control system while the rail vehicle is in a braked state, in which the rail vehicle is braked by the service brakes (9);
- releasing the service brakes (9) in all cars (1-4) by means of a control air pressure in the main air line (6) and/or by applying a control air pressure to the control valves (7) in the cars (1-4), and starting the rail vehicle;
**characterized in that**
prior to releasing the service brakes (9), the cars (1-4) are braked using the electric or electro-pneumatic parking brakes (10), and the electric or electro-pneumatic parking brakes (10) are released simultaneously via a central control immediately before starting or simultaneously with the start of movement, or are released individually or in groups one after another at time intervals during starting.

2. A method according to claim 1, **characterized in that** the rail vehicle is started on an uphill gradient.

3. A method according to one of claims 1 or 2, **characterized in that** the electric or electro-pneumatic hand brakes (10) in the cars (1-4) are released simultaneously or sequentially via central control only if the driver has previously activated a hill-start mode.

4. A method according to any one of claims 1 to 3, **characterized in that** the sequence and/or the time intervals are determined based on a sequence of cars (1-4) coupled together in the rail vehicle and/or based on a number of cars (1-4) coupled together in the rail vehicle and/or based on a length of the rail vehicle.

5. A method according to any one of claims 3 or 4, **characterized in that** a brake control unit (11) for controlling the electric or electro-pneumatic parking brakes (10) is provided in each car (1-4), wherein the brake control units (11) of the various cars (1-4) communicate with one another, and, upon activation of the hill start mode by the driver, one of the brake control units (11) is selected as a master control unit, which issues control commands for braking to all other brake control units (11).

6. A method according to any one of claims 3 to 5, **characterized in that** the hill start mode is automatically deactivated when the last car (4) of the rail vehicle is in motion.

7. A method according to any one of claims 1 to 6, **characterized in that** sensors (13) for at least indirectly detecting a tractive force are arranged at the couplings (12) between the cars (1-4), are arranged to at least indirectly detect a traction force, and upon detection of a traction force, the electric or electro-pneumatic handbrake (10) of the car (1-4) following the respective coupling (12) in the car sequence is released.

8. A method according to any one of claims 1 through 7, **characterized in that** a movement of a car (1-4) is detected, and upon detection of such movement, the electric or electro-pneumatic handbrake (10) of the car (1-4) following the car (1-4) in the train sequence is released.

9. A method according to any one of claims 1 to 8, **characterized in that** the time intervals prior to the start of departure or during departure are calculated, in particular by means of a simulation of a traction force wave propagating from car (1-4) to car (1-4) as the rail vehicle departs.

10. A method according to any one of claims 1 to 9, **characterized in that** the electric or electro-pneumatic parking brakes (10) are activated and released by an electric actuator.

11. A method according to any one of claims 1 to 10, **characterized in that**, after receiving the start command and after a predetermined time period has elapsed, if not all cars (1-4) have started moving, the service brakes (9) are applied and the electric or electro-pneumatic parking brakes (10) are released, and a warning message is issued.

## Revendications

1. Procédé de démarrage d'un véhicule ferroviaire à plusieurs éléments comprenant une pluralité de voitures (1, 2, 3, 4) couplés mécaniquement les uns aux autres, ledit véhicule ferroviaire étant équipé d'un système de freinage pneumatique (5) comprenant une conduite d'air principale (6) traversant tous les wagons (1-4) et des cylindres de frein (8) pouvant être alimentés en air comprimé provenant de la conduite d'air principale (6) via une vanne de commande (7) (8) pouvant être alimentés en air comprimé provenant de la conduite d'air principale (6) via une vanne de commande (7), ainsi que des freins de service (9) actionnés en fonction de l'alimentation en air comprimé des cylindres de frein (8) dans chaque voiture (1-4),
chaque wagon (1-4) ou plusieurs wagons (1-4) comportent chacun un frein à main électrique ou électropneumatique (10) ;
comprenant les étapes suivantes :
- réception d'une commande de démarrage provenant d'un conducteur ou d'un système de commande de conduite automatique alors que le véhicule ferroviaire est à l'arrêt, dans un état où le véhicule ferroviaire est freiné par les freins de service (9) ;
- desserrage des freins de service (9) dans toutes les voitures (1-4) par une pression d'air de commande dans la conduite d'air principale (6) et/ou par l'application d'une pression d'air de commande aux soupapes de commande (7) dans les voitures (1-4), et mise en marche du véhicule ferroviaire ;
**caractérisé en ce que**
avant le desserrage des freins de service (9), les voitures (1-4) sont freinées à l'aide des freins à main électriques ou électropneumatiques (10) et les freins à main électriques ou électropneumatiques (10) sont desserrés de manière centralisée soit immédiatement avant le démarrage, soit simultanément au début du démarrage, soit lors du démarrage dans un ordre séquentiel avec des intervalles de temps, individuellement ou par groupes successifs.

2. Procédé selon la revendication 1, **caractérisé en ce que** le véhicule ferroviaire démarre en montée.

3. Procédé selon l'une des revendications 1 ou 2, **caractérisé en ce que** les freins à main électriques ou électropneumatiques (10) des voitures (1-4) ne sont desserrés de manière centralisée, simultanément ou successivement, que si le conducteur a préalablement activé un mode de démarrage en côte.

4. Procédé selon l'une des revendications 1 à 3, **caractérisé en ce que** l'ordre et/ou les intervalles de temps sont déterminés en fonction d'une succession de voitures (1-4) attelées les unes aux autres dans le véhicule ferroviaire et/ou en fonction d'un nombre de voitures (1-4) attelées les unes aux autres dans le véhicule ferroviaire et/ou en fonction d'une longueur du véhicule ferroviaire.

5. Procédé selon l'une des revendications 3 ou 4, **caractérisé en ce que**, dans chaque voiture (1-4), il est prévu un dispositif de commande de freinage (11) destiné à commander les freins à main électriques ou électropneumatiques (10), les dispositifs de commande de freinage (11) des différentes voitures (1-4) communiquant entre eux, et qu'après l'activation du mode de démarrage en côte par le conducteur, l'un des appareils de commande de freinage (11) est sélectionné comme appareil de commande principal, lequel émet des ordres de commande de freinage à tous les autres appareils de commande de freinage (11).

6. Procédé selon l'une des revendications 3 à 5, **caractérisé en ce que** le mode de démarrage en côte est automatiquement désactivé lorsque la dernière voiture (4) du véhicule ferroviaire est en mouvement.

7. Procédé selon l'une des revendications 1 à 6, **caractérisé en ce que** des capteurs (13) sont disposés au niveau des attelages (12) entre les voitures (1-4) sont disposés des capteurs (13) destinés à détecter au moins indirectement une force de traction, et qu'en cas de détection d'une force de traction, le frein à main électrique ou électropneumatique (10) du wagon (1-4) suivant l'attelage (12) concerné dans l'ordre des wagons est desserré.

8. Procédé selon l'une des revendications 1 à 7, **caractérisé en ce qu'**un mouvement d'un wagon (1-4) est détecté et, en cas de détection d'un mouvement, le frein à main électrique ou électropneumatique (10) du wagon (1-4) suivant le wagon (1-4) dans l'ordre des wagons est desserré.

9. Procédé selon l'une des revendications 1 à 8, **caractérisé en ce que** les intervalles de temps sont calculés avant le début du démarrage ou lors du démarrage, notamment au moyen d'une simulation d'une onde de traction se propageant du wagon (1-4) au wagon (1-4) lors du démarrage du véhicule ferroviaire.

10. Procédé selon l'une des revendications 1 à 9, **caractérisé en ce que** les freins à main électriques ou électropneumatiques (10) sont activés et desserrés à l'aide d'un servomoteur électrique.

11. Procédé selon l'une des revendications 1 à 10, **caractérisé en ce qu'**après réception de la commande de démarrage, à l'expiration d'un intervalle de temps prédéterminé, si tous les wagons (1-4) ne se sont pas mis en mouvement, les freins de service (9) sont serrés et les freins à main électriques ou électropneumatiques (10) sont desserrés, et un message d'avertissement est émis.
